Europäisches Patentamt

European Patent Office

Office européen des brevets

(19)

(11) Veröffentlichungsnummer: **0 264 808**
**B1**

(12) **EUROPÄISCHE PATENTSCHRIFT**

(45) Veröffentlichungstag der Patentschrift: **16.01.91**

(51) Int. Cl.⁵: **G 02 F 1/133**

(21) Anmeldenummer: **87115004.1**

(22) Anmeldetag: **14.10.87**

(54) **Flüssigkristallzelle.**

(30) Priorität: **17.10.86 DE 3635331**

(43) Veröffentlichungstag der Anmeldung:
**27.04.88 Patentblatt 88/17**

(45) Bekanntmachung des Hinweises auf die
Patenterteilung:
**16.01.91 Patentblatt 91/03**

(84) Benannte Vertragsstaaten:
**AT CH DE FR GB IT LI NL**

(56) Entgegenhaltungen:
**EP-A-0 041 184**

(73) Patentinhaber: **Nokia Unterhaltungselektronik
(Deutschland) GmbH
Östliche Karl-Friedrich-Strasse 132
D-7530 Pforzheim (DE)**

(72) Erfinder: **Zondler, Rolf, Dr.
Aiterhofener Strasse 42
D-8440 Straubing-Ittling (DE)**

Courier Press, Leamington Spa, England.

## Beschreibung

Die Erfindung betrifft eine Flüssigkristallzelle mit einer polymeren Orientierungsschicht. Derartige polymere Orientierungsschichten lassen sich verhältnismäßig einfach erzeugen, da das organische Material, in einem Lösungsmittel gelöst, durch Tauchen, Aufsprühen oder Aufstreichen aufgebracht werden kann, wozu nur einfache Vorrichtungen erforderlich sind.

Aus EP—A—0 041 184 ist es bekannt, für die Orientierungsschicht Polymerketten mit jeweils gleich langen Seitenketten zu verwenden. Die Seitenketten sind dabei so beschaffen, daß die Orientierungsschicht selbst Flüssigkristalleigenschaften aufweist. Dadurch ist die Orientierungseigenschaft der Schicht schaltbar. Die Schicht sorgt aber nicht nur für ein schaltbares Orientieren von Flüssigkristallen, also für ein Ausrichten der Flüssigkristalle parallel zu den Seitenrändern der Zelle, sondern sie sorgt auch für ein Verkippen der Moleküle gegenüber der Orientierungschichtebene. Der Kippwinkel hängt vor allem davon ab, wie dicht die Seitenketten angeordnet sind.

Der Erfindung liegt die Aufgabe zugrunde, eine Flüssigkristallzelle mit einer anderen als der bekannten organischen Orientierungsschicht anzugeben, welche neue Orientierungsschicht es ebenfalls ermöglicht, den Kippwinkel von Flüssigkristallmolekülen festzulegen.

Die erfindungsgemäße Flüssigkristallzelle weist auf den dem Flüssigkristallmaterial zugewandten Flächen der Zellenwände Orientierungsschichten aus Polymerketten mit Seitenketten auf, wobei die Seitenketten abwechselnd unterschiedlich lang sind und in einem gegenseitigen Abstand angeordnet sind, der an die Länge der gehaltenen Flüssigkristallmoleküle angepaßt ist, und wobei die Seitenketten Endgruppen aufweisen, die mit dem freien Ende von Flüssigkristallmolekülen so in Wechselwirkung treten, daß jedes Flüssigkristallmolekül an d.h. der anderen Länge einem einen Ende von der Endgruppe der einen Art d.h. der einen Länge von Seitenketten, und an seinem anderen Ende von der Endgruppe der anderen Art d.h. der anderen Lange von Seitenketten gehalten wird.

Als organisches Material für die Orientierungsschicht wird also gemäß der Erfindung grundsätzlich ein langkettiges Polymer verwendet, das Seitenketten hat.

Als langkettige Polymere kommen, z.B. Polyvinylalkohol, Polysiloxane, Polyester, Polyimide, Polyoxazole, Polythiazole, Polyimidazole, Polyoxazinone, Polyoxazindione, Polyamide, Polycarbonat oder Polytetrafluoräthylen in Betracht.

Diese Polymere werden aus Monomeren zusammengesetzt, die in ihrer Struktur so ausgebildet sind, daß in der späteren Polymerkette in bestimmten Abständen Seitenketten vorhanden sind, die zu einer Wechselwirkung mit den Flüssigkristallmolekülen befähigt sind. Durch die Wechselwirkungen, wie sie oben beschrieben wurden, werden die Flüssigkristallmoleküle mit ihrem Ende an den Seitenketten festgehalten. Die Auswahl der geeigneten Seitenketten richtet sich daher nach den verwendeten Flüssigkristallmolekülen. Durch geeignete Wahl von Monomeren läßt sich der Abstand der Seitenketten so einstellen, daß er an die Moleküllänge der Flüssigkristallmoleküle angepaßt ist.

Als Endgruppen der Flüssigkristallmoleküle und der Seitenketten können beispielsweise Halogene, Nitroverbindungen, CN-Verbindungen, Alkyle und Alkyloxygruppen verwendet werden.

An jeder Polymerkette sind abwechselnd unterschiedliche Seitenketten angeordnet, von denen jeweils eine mit einem Ende des Flüssigkristallmoleküls in Wechselwirkung tritt und die daneben angeordnete mit dem anderen Ende des gleichen Flüssigkristallmoleküls. Die Seitenketten haben also abwechselnd unterschiedliche Endgruppen an ihren freien Enden und sind auch unterschiedlich lang. Der Kippwinkel wird in diesem Falle durch das Längenverhältnis der jeweils nebeneinander an der Polymerkette angeordneten Seitenketten bestimmt. Wenn die unterschiedlichen Seitenketten nur einen geringen Längenunterschied haben, wird ein kleiner Kippwinkel erhalten, bei großem Längenunterschied ein großer Kippwinkel. Bei einer Art der unterschiedlichem Seitenketten können die Endgruppen direkt an die Polymerkette gebunden sein. Natürlich muß der gegenseitige Abstand der unterschiedlichen Seitenketten an der Polymerkette entsprechend gewählt werden. Dieser richtet sich nach der unterschiedlichen Länge der Seitenketten und der Länge des Flüssigkristallmoleküls. Auf jeden Fall muß der Abstand der unterschiedlichen Seitenetten voneinander kleiner sein als die Länge des Flüssigkristallmoleküls.

Die Endgruppen der Seitenketten können auch derart unterschiedlich sein, daß sie in Wechselwirkung mit den Enden unterschiellicher Flüssigkristallmoleküle treten können. Auf diese Weise können unterschiedliche Flüssigkristalle eines Gemisches in eine gewünschte Kipplage gebracht werden.

## Patentansprüche

1. Flüssigkristallzelle, bei der auf den dem Flüssigkristallmaterial zugewandten Flächen der Zellenwände Orientierungsschichten aus Polymerketten mit Seitenketten angeordnet sind, dadurch gekennzeichnet, daß die Seitenketten abwechselnd unterschiedlich lang sind und in einem gegenseitigen Abstand angeordnet sind, der an die Länge der gehaltenen Flüssigkristallmoleküle angepaßt ist, und daß die Seitenketten Endgruppen aufweisen, die mit den freien Enden von Flüssigkristallmolekülen so in Wechselwirkung treten, daß jedes Flüssigkristallmolekül an seinem einen Ende von der Endgruppe der einen Art d.h. der einen Länge von Seitenketten und an seinem anderen Ende von der Endgruppe der anderen Art d.h. der anderen Länge von Seitenketten, gehalten wird.

2. Flüssigkristallzelle nach Anspruch 1, dadurch gekennzeichnet, daß eine Art von Seitenketten nur aus den Endgruppen besteht, die also direkt an die Polymerkette gebunden sind.

3. Flüssigkristallzelle nach einem der Ansprüche 1 oder 2, dadurch gekennzeichnet, daß bei einer zweiten Art von Seitenketten die jeweilige Endgruppe über eine Kette von Kohlenstoffatomen an die jeweilige Polymerkette gebunden ist.

4. Flüssigkristallzelle nach einem der Ansprüche 1—3, dadurch gekennzeichnet, daß die Endgruppen der Seitenketten derart unterschiedlich ausgebildet sind, daß die Moleküle unterschiedlicher Flüssigkristalle einer Mischung mit unterschiedlichen Endgruppen der Seitenketten in Wechselwirkung treten.

**Revendications**

1. Cellule à cristal liquide sur les surfaces des parois orientées vers le cristal liquide de laquelle sont disposées des couches d'orientation en chaînes de polymère avec des chaînes latérales, caractérisée en ce que les chaînes latérales ont alternativement une longueur différente et sont disposées à un écart réciproque adapté à la longueur des molécules de cristal liquide maintenues et que les chaînes latérales présentent des groupes terminaux qui entrent en interaction avec les extrémités libres de molécules de cristal de telle sorte que chaque molécule est maintenu sur l'une de ses extrémités par le groupe terminal de l'un des genres de chaînes latérales, c'est-à-dire l'une des longueurs, et sur l'autre extrémité par le groupe terminal de l'autre genre, c'est-à-dire l'autre longueur, des chaînes latérales.

2. Cellule à cristal liquide selon la revendication 1, caractérisée en ce que un genre de chaînes latérales ne consisté qu'en groupes terminaux qui sont donc liés directement à la chaîne de polymère.

3. Cellule à cristal liquide selon l'une des revendications 1 ou 2, caractérisée en ce que sur un deuxième genre de chaînes latérales le groupe terminal correspondant est lié à la chaîne de polymère adéquate à travers une chaîne d'atomes de carbone.

4. Cellule à cristal liquide selon l'une des revendications 1 ou 3, caractérisée en ce que les groupes terminaux des chaînes latérales sont conçus de façon tellement différentes que les molécules de cristaux liquides variés d'un mélange avec des groupes terminaux variés des chaînes latérales entrent en intéraction.

**Claims**

1. A liquid crystal cell, wherein orientation layers of polymer chains with side chains are arranged on the surfaces of the cell walls facing the liquid crystal material, characterized in that the side chains are alternatively of different lengths and are arranged at a distance from each other that is matched to the length of the liquid crystal molecules to be held, and that the side chains have end groups that interact with the free ends of liquid crystal molecules in such a manner that each liquid crystal molecule will be held at one end by one type of side chain, i.e. by a chain of one length, and at the other end by the other type of side chain, i.e. by a chain of the other length.

2. A liquid crystal cell according to Claim 1, characterized in that one type of side chain consists only of the end groups, which are therefore bound directly to the polymer chains.

3. A liquid crystal cell according to Claim 1 or Claim 2, characterized in that in a second type of side chain the appropriate end group is bound to the polymer chain via a chain of carbon atoms.

4. A liquid crystal cell according to any one of Claims 1 to 3, characterized in that the end groups of the side chains are so different from each other that the molecules of different liquid crystal molecules will interact with different end groups of the side chains.